# EUROPÄISCHE PATENTSCHRIFT

(11) **EP 1 073 291 B1**
(45) Veröffentlichungstag und Bekanntmachung des Hinweises auf die Patenterteilung: **01.10.2003**
(21) Anmeldenummer: 00115778.3
(22) Anmeldetag: 21.07.2000
(51) Int. Cl.: H04Q 7/22

(54) **Verfahren und Kommunikationssystem zur Behandlung eines Paketdienstes**
Method and communication system for treatment of a packet data service
Procédé et système de communication pour traiter un service de données en paquets

(30) Priorität: 26.07.1999 DE 19935002
(43) Veröffentlichungstag der Anmeldung: 31.01.2001
(73) Patentinhaber: SIEMENS AKTIENGESELLSCHAFT, 80333 München (DE)
(72) Erfinder: Hahn, Wolfgang, 16562 Bergfelde (DE); Mademann, Frank, 13189 Berlin (DE)

(56) Entgegenhaltungen:
- "Digital cellular telecommunications system (Phase 2+); General Packet Radio Serrvice (GPRS); Service Description; Stage 2 (GSM 03.60 version 6.3.2 Release 1997)" ETSI EUROPEAN STANDARD, 1. Juli 1999 (1999-07-01), Seiten 1-107, XP002181422 Sophia Antipolis, France
- BRASCHE G ET AL: "CONCEPTS, SERVICES, AND PROTOCOLS OF THE NEW GSM PHASE 2+ GEBERAKL PACKET RADIO SERVICE" IEEE COMMUNICATIONS MAGAZINE, IEEE SERVICE CENTER. PISCATAWAY, N.J, US, Bd. 35, Nr. 8, 1. August 1997 (1997-08-01), Seiten 94-104, XP000704443 ISSN: 0163-6804

## Beschreibung

Die Erfindung betrifft ein Verfahren und ein Kommunikationssystem zur Behandlung eines Paketdienstes mit einem paketbasierten Kern-Kommunikationsnetz und einem Anschluss-Kommunikationsnetz.

Es ist allgemein bekannt, Daten als Paketdaten gemäß einem Paketdienst entweder nur in einem leitungsgebundenen Kommunikationsnetz oder nur in einem Kommunikationsnetz mit Funkschnittstelle zu einer und von einer Kommunikationseinrichtung zu übertragen. Die Architektur für die Behandlung des Paketdienstes geht davon aus, dass ein Anschluss-Kommunikationsnetz mit einer Funkschnittstelle existiert, das das von einem Teilnehmer benutzte mobile Kommunikationsendgerät bedient und die drahtlose Übertragung von Daten in beiden Übertragungsrichtungen zur Verfügung stellt. Darüber hinaus ist ein Zugang des Anschluss-Kommunikationsnetzes zu einem paketbasierten Kern-Kommunikationsnetz - z.B. dem Internet -, das zumindest teilweise die Daten als Paketdaten überträgt und ein bestimmtes Paketdatenprotokoll - z.B. das Internet Protokoll - unterstützt, notwendig.

Ein solches System beispielhaft in dem ETSI Standard EN 301 344, V6.3.2 beschrieben.

Ein Problem bei der Behandlung von Paketdiensten gemäß obiger Architektur besteht darin, auch für mobile Teilnehmer bzw. mobile Kommunikationseinrichtungen die Signalisierung der Paketdatenübertragung über Paketdatenprotokolle - vorzugsweise ein Internet-Protokoll (IP) - zur Verfügung zu stellen. Dabei ist die Mobilitätsfunktion zu berücksichtigen, d.h. das Routen (Leitweglenkung) der Verbindung zum momentanen Aufenthaltsort der mobilen Kommunikationseinrichtung - z.B. über ihre Teilnehmerrufnummer (Mobile Subscriber ISDN Number) - muss ermöglicht werden. Allgemein ist es bekannt, im Hinblick auf die Mobilität des Teilnehmers bzw. der Kommunikationseinrichtung eine Aufenthaltsabfrage (Interrogation), durch die eine Aufenthaltsrufnummer (Mobile Subscriber Roaming Number) angefordert wird, zu starten.

Der Erfindung liegt die Aufgabe zugrunde, ein Verfahren und ein Kommunikationssystem anzugeben, durch das bei der Behandlung eines Paketdienstes die Erreichbarkeit mobiler Kommunikationseinrichtungen für die Paketdatenübertragung weiterhin gewährleistet ist.

Diese Aufgabe wird erfindungsgemäß durch das Verfahren mit den Merkmalen des Anspruchs 1 und das Kommunikationssystem mit den Merkmalen des Anspruchs 12 gelöst. Vorteilhafte Weiterbildungen sind Gegenstand von Unteransprüchen.

Gemäß dem Gegenstand der Erfindung wird in den Prozess der Aufenthaltsabfrage die Rückübertragung einer Paketdatenadresse (IP Adresse) zur Identifikation einer Zieleinrichtung-vorzugsweise die eines die mobile Kommunikationseinrichtung bedienenden Netzknotens oder die der mobilen Kommunikationseinrichtung selbst abhängig davon, ob die mobile Kommunikationseinrichtung den Paketdatendienst unterstützen kann oder nicht - für die Übertragung der Paketdaten eingebaut. Damit lassen sich vorteilhaft Funktionen eines leitungsvermittelten Netzes auf Funktionen eines paketbasierten Netzes und umgekehrt abbilden und dabei die Mobilitätsfunktion, d.h. die Erreichbarkeit mobiler Kommunikationseinrichtungen für die Paketdatenübertragung, und die Signalisierung der Paketdatenübertragung über ein Paketdatenprotokoll - vorzugsweise das IP-Protokoll - miteinander vereinen.

Von Vorteil ist, wenn für jeweils aus leitungsvermittelten Kommunikationsnetzen ankommende Verbindungen von einer Zugangsvermittlungseinrichtung die Aufenthaltsabfrage gestartet, die Paketdatenadresse zusammen mit der Aufenthaltsrufnummer empfangen und für den Aufbau eines Verbindungsprotokolls zum Kontrollknoten benutzt wird.

Alternativ dazu ist es ebenfalls vorteilhaft, wenn für jeweils aus Paketnetzen ankommende Verbindungen eine Zugangsüberwacheinrichtung um die entsprechende Funktion für die Abfrage zu einer virtuellen Zugangsvermittlungseinrichtung erweitert wird. Die Aufenthaltsabfrage kann dann von dieser virtuellen Zugangsvermittlungseinrichtung gestartet und die Paketdatenadresse zusammen mit der Aufenthaltsrufnummer empfangen werden.

Vorzugsweise wird bei jeweils aus leitungsvermittelten Kommunikationsnetzen ankommenden Verbindungen von der Zugangsvermittlungseinrichtung und von dem Kontrollknoten jeweils eine Abbildung einer Teilnehmerrufnummer auf die Paketdatenadresse und umgekehrt durchgeführt (Mapping).

Eine weitere vorteilhafte Ausgestaltung der Erfindung besteht darin, dass durch den Kontrollknoten entschieden wird, ob zu der mobilen Kommunikationseinrichtung eine paketbasierte Verbindung oder eine leitungsvermittelte Verbindung (Bearer) aufgebaut wird. Dabei gehen in die Entscheidung vorzugsweise Fähigkeiten der mobilen Kommunikationseinrichtung und Netzwerkpräferenzen ein.

Nachfolgend wird die Erfindung anhand eines in der Zeichnung dargestellten Ausführungsbeispiels näher erläutert. Es zeigen
- Fig. 1: ein Blockschaltbild der prinzipiellen Architektur des Kommunikationssystems zur Behandlung eines Paketdienstes, und
- Fig. 2: die Signalisierung und den Transport der Paketdaten abhängig von der Art der Kommunikationseinrichtungen und Netzeinrichtungen.

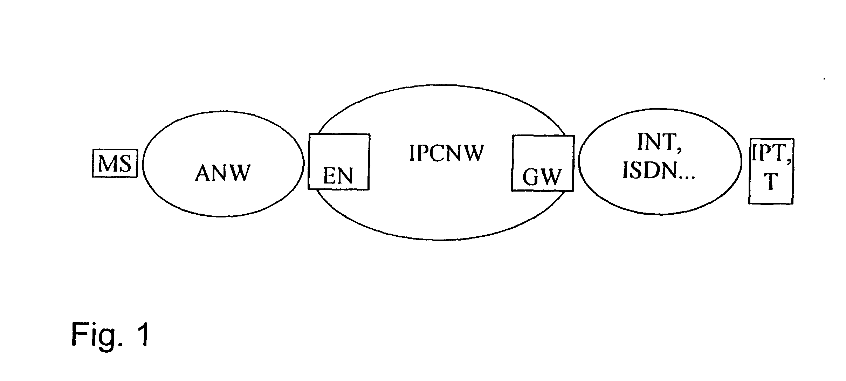

Die Architektur eines Kommunikationssystems zur Behandlung eines Paketdienstes wird anhand der Fig. 1 verdeutlicht, die eine von einem Teilnehmer benutzbare mobile Kommunikationseinrichtung MS - beispielsweise eine Mobilstation - und ein die Mobilstation bedienendes Anschluss-Kommunikationsnetz ANW (Access Network) mit einer Funkschnittstelle (air interface) - beispielsweise betrieben nach einem der bekannten TDMA- , CDMA- oder FDMA- Zugriffsverfahren oder einer davon abgeleiteten beliebigen Kombination der Zugriffsverfahren - als die mobilfunkspezifischen Elemente des Kommunikationssystems zeigt. Damit verbunden sind die paketdienstspezifischen Elemente des Kommunikationssystems, bestehend aus einem paketbasierten Kern-Kommunikationsnetz IPCNW (Internet Protocol Core Network), vorzugsweise einem IP - (Internet Protocol) basierten Paketdatennetz, zur Übertragung der Paketdaten. Das Kern-Kommunikationsnetz IPCNW ist mit einem oder mehreren externen Kommunikationsnetzen wie beispielsweise dem paketbasierten Internet INT, den leitungsgebundene Netzen wie dem ISDN-Netz und/oder dem öffentlichen Fernsprechnetz und/oder einem weiteren Mobilfunknetz verbunden. Die Teilnehmer dieser externen Netze verfügen über Kommunikationseinrichtungen IPT, T - beispielsweise einem Internet-Terminal oder einem sonstigen leitungsgebundenen Endgerät zum Senden und Empfangen von Paketdaten;

An der Schnittstelle zwischen Kern-Kommunikationsnetz IPCNW und Anschluss-Kommunikationsnetz ANW ist ein Kontrollknoten EN (Edge Node) angeordnet, der die Übertragung der Paketdaten steuert und in die Datenübertragung von und zu der mobilen Kommunikationseinrichtung MS über die Funkschnittstelle des Anschluss-Kommunikationsnetzes ANW integriert ist. Er ermöglicht auch eine Überprüfung der Paketdaten auf Ihren Inhalt, sodass durch die Kenntnis der Art der übertragenen Paketdaten - insbesondere bei Vorliegen der Multimediadaten in Form von z.B. Audiodaten und/oder Videodaten - durch den Kontrollknoten die Steuerung und Ausführung bestimmter Dienste erleichtert wird. Der die mobile Kommunikationseinrichtung MS bedienende Netzknoten EN des Kommunikationsnetzes IPCNW mit Anschluß zum Netzwerk ANW greift vorteilhaft aktiv in die Signalisierung für die Übertragung der Paketdaten - z.B. der Multimediadaten ein - , d.h. diese Signalisierung wird nicht transparent zur Kommunikationseinrichtung MS weitergeleitet. Auf der Seite des Netzüberganges vom Kern-Kommunikationsnetz IPCNW zu den externen Kommunikationsnetzen INT, ISDN sind eine oder mehrere Zugangseinrichtungen GW, wie z.B. eine Zugangsvermittlungseinrichtung, eine Zugangsüberwacheinrichtung und eine Paketdaten-Zugangseinrichtung vorhanden, die jeweils eine Schnittstelle entsprechend der Art des angeschlossenen externen Netzes bereitstellen.

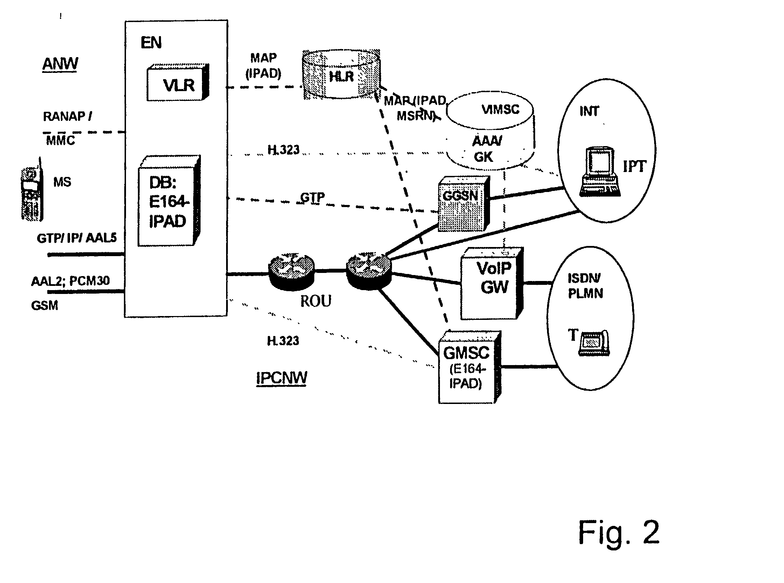

Das Blockschaltbild gemäß Fig.2 zeigt die Signalisierung - jeweils dargestellt als unterbrochene Linien - und den Transport der Paketdaten - jeweils dargestellt als ununterbrochene Linien - zwischen den erfindungsgemäß in die Behandlung des Paketdienstes involvierten Einrichtungen abhängig von der Art der Kommunikationseinrichtungen und Netzeinrichtungen. Diese sind :
- das Anschluss-Kommunikationsnetz ANW mit der Funkschnittstelle zu der mobilen Kommunikationseinrichtung MS. Dabei werden ein Signalisierungsprotokoll RANAP (Radio Access Network Application Part) für die mobilfunkspezifischen Funktionen und ein Multimediaprotokoll MMC (Multi Media Control) für die Übertragung von Multimediadaten als Paketdaten unterstützt. Der Transport der Paketdaten erfolgt über verschiedene Verbindungen, die zum einen paketbasiert gemäß GTP (General Packet Radio System Tunnel Protocol) oder IP (Internet Protocol) oder AAL5 (ATM Adaptation Layer No. 5) und zum anderen leitungsvermittelt gemäß AAL2 (ATM Adaptation Layer No. 2) oder gemäß PCM30 (Pulse Code Modulation) oder gemäß GSM (Global System for Mobile Communication) sein können.
- der Kontrollknoten EN mit einer Teilnehmerdatenbasis VLR (Visitor Location Register) zur Registrierung und Speicherung der Daten mobiler Teilnehmer bzw. mobiler Kommunikationseinrichtungen entsprechend einem Mobilfunknetz. Nicht dargestellt sind eine Zugangssteuereinrichtung (Media Gateway Controller) für die Ausführung der Kontrollfunktion im Signalisierungspfad und eine Multimedia-Zugangseinrichtung (Media Gateway) für den Transport der Paketdaten im Verbindungspfad. Die Zugangssteuereinrichtung stellt das Vorliegen von Multimediadaten in den empfangenen Paketdaten fest und teilt entsprechende Funkressourcen des Anschluss-Kommunikationsnetzes ANW für die Übertragung der vorzugsweise Multimediadaten über die Funkschnittstelle zu. Des weiteren wird von ihr der Aufbau und Abbau von Trägerkanälen entsprechend der zur Übertragung der Paketdaten notwendigen Funkressourcen gesteuert. Eine Datenbasis DB sorgt für gegenseitige Abbildung einer Teilnehmerrufnummer E164 auf eine Paketdatenadresse IPAD (IP Address), die zur Identifikation des Netzknotens EN als Zieleinrichtung für die Datenübertragung in die Architektur dient.
- eine zentrale Teilnehmerdatenbasis HLR (Home Location Register), die mit dem Kontrollknoten EN über das mobilfunkspezifische Protokoll MAP (Mobile Application Part) verbunden ist. Die zentrale Teilnehmerdatenbasis HLR kann entweder beim Einbuchen des Teilnehmers in den Knoten (Location Update) oder während einer ankommenden Aufenthaltsabfrage (Interrogation) vom Netzknoten EN über dessen Paketdatenadresse IPAD informiert werden. Sie liefert als Anwort auf die Aufenthaltsabfrage die Paketdatenadresse IPAD, vorzugsweise zusammen mit der Aufenthaltsrufnummer MSRN für den weiteren Verbindungsaufbau.
- eine Zugangsüberwacheinrichtung GK (Gatekeeper) als Schnittstelleneinrichtung für jeweils aus dem Internet INT ankommende und durch das Terminal IPT initiierte Verbindungen, die eine Paketdaten-Signalisierung erfordern und die Ausführung von Funktionen AAA wie Authentifikation (Authentication), Authorisierung (Authorization) und Vergebührung (Accounting) umfassen. Diese Zugangsüberwacheinrichtung GK unterstützt dabei das H.323-Signalisierungsprotokoll für Multimediadaten-Übertragung in reinen IP-basierten (Internet Protocol) Netzen. Um die Aufenthaltsabfrage auch für paketbasierte Verbindungen durchführen zu können, ist sie um die entsprechende Funktion zu einer virtuellen Zugangsvermittlungseinrichtung VIGMSC erweitert worden.
- eine Paketdaten-Zugangseinrichtung GGSN (Gateway GPRS Service Node), die den Zugang von/zu dem Kern-Kommunikationsnetz IPCNW zu/von dem Internet INT einschließlich der Kommunikationseinrichtung IPT, bestehend aus dem Internet-Terminal, ermöglicht und dabei das GTP-Signalisierungsprotokoll (GPRS Tunnel Protocol) für die Übertragung von Paketdaten gemäß dem GPRS-Dienst (General Packet Radio System) unterstützt. Über einen Tunnel erfolgt die Paketdatenübertragung, wobei eine Umschaltung zu einem anderen Tunnel möglich ist und dadurch ein neuer Übertragungspfad durch das Kommunikationsnetz entsteht.
- eine Zugangseinrichtung VoIPGW (Voice over IP Gateway) für aus einem der Kommunikationsnetze ISDN, PLMN ankommende Verbindungen oder dem Netz, auf denen Sprachdaten paketbasiert über das Kern-Kommunikationsnetz IPCNW bzw. Durchschalteeinrichtungen ROU weitertransportiert werden.
- eine Zugangsvermittlungseinrichtung GMSC, die den Zugang für aus einem der leitungsvermittelten Netze ankommende und von dem Endgerät T initiierte Verbindungen zum paketbasierten Kern-Kommunikationsnetz IPCNW bzw. den Durchschalteeinrichtungen ROU ermöglicht. Dabei führt sie in gleicher Weise wie der Kontrollknoten EN eine Abbildung der Teilnehmerrufnummer E164 auf die Paketdatenadresse IPAD und umgekehrt durch. Die Zugangsvermittlungseinrichtung GMSC unterstützt das H.323-Protokoll für die Paketdaten-Signalisierung sowie das Paket-Transportprotokoll im Verbindungspfad .
- einen oder mehrere Durchschalteeinrichtungen ROU in Form von Routern oder Vermittlungseinrichtungen für den Transport der Paketdaten, insbesondere der Multimediadaten von/zu der Multimedia-Zugangseinrichtung des Netzknotens EN.

Im folgenden wird das Zusammenwirken der Einrichtungen an unterschiedlichen Fallgestaltungen erläutert:

### 1. Das Kern-Kommunikationsnetz IPCNW ist IP-basiert und die mobile Kommunikationseinrichtung MS leitungsvermittelt an der Funkschnittstelle des Anschluss-Kommunikationsnetzes ANW angeschlossen

### 1.1 Zugang vom leitungsvermittelten Festnetz ISDN

Die Kommunikationseinrichtung MS besitzt keine Paketdatenadresse IPAD, sondern nur die Teilnehmerrufnummer MSISDN. Damit wird vom Netz ISDN bis zur Zugangsvermittlungseinrichtung GMSC geroutet. Diese fragt die Teilnehmerdatenbasis HLR nach der Aufenthaltsrufnummer MSRN ab (HLR-Interrogation). Diese sendet die Paketdatenadresse IPAD des Kontrollknotens EN zurück und vorzugsweise mit ihr zusammen auch die Aufenthaltsrufnummer MSRN. Mit der Aufenthaltsrufnummer MSRN kann in ein fremdes (visited) Mobilfunknetz PLMN geroutet werden, falls sich die Kommunikationseinrichtung MS dort aufhält. Die Paketdatenadresse IPAD wird für den Aufbau des Verbindungsprotokolls H.323 (Call Control) zwischen Zugangsvermittlungseinrichtung GMSC und Kontrollknoten EN benutzt. Die Referenz zu der konkreten Verbindung wird durch das Signalisierungsprotokoll H.323 hergestellt, wobei die Teilnehmerrufnummer MSISDN oder die Aufenthaltsrufnummer MSRN zu Hilfe genommen werden kann.

Der Kontrollknoten EN entscheidet anhand von Fähigkeiten der mobilen Kommunikationseinrichtung MS und Netzwerkpräferenzen ob zur Kommunikationseinrichtung MS ein paket- oder leitungsorientierter Trägerkanal (Bearer) aufgebaut werden soll. Um in diese Entscheidung die Fähigkeit der rufenden Mobilstation einzubeziehen, welche in diesem Fall nur leitungsvermittelte Dienste unterstützt, kann in die MMC-Signalisierung zum Kontrollknoten EN ein entsprechender Parameter aufgenommen werden.

Umgekehrt kann der Kontrollknoten EN rückwärts die Auswahl eines paketorientierten Trägerkanals signalisieren, in dem keine Aufenthaltsrufnummer MSRN sondern nur eine Paketdatenadresse übertragen wird, wenn das bereits zum Zeitpunkt der AUfenthaltsabfrage feststeht, z.B. weil die Kommunikationseinrichtung MS nur Paketdienste unterstützt, d.h. sie ist nicht leitungsvermittelt an die Funkschnittstelle angeschlossen.

Für den abgehenden Verbindungsaufbau (Mobile Originated Call) kann die Datenbasis DB verwendet werden, welche ein _{"}Mapping" zwischen gerufener E164-Nummer und zugehöriger Paketdatenadresse IPAD durchführt. Diese kann sich wegen ihrem statischen Charakter auch innerhalb des Knotens befinden. Das Verfahren kann als Alternative zu oben auch in der Zugangsvermittlungseinrichtung GMSC angewendet werden, wobei bei einer Aufenthaltsrufnummer MSRN aus dem eigenen Netz über einen Datenbasiszugriff eine entsprechende Ziel-Paketdatenadresse ermittelt wird.

### 1.2 Zugang vom Internet INT

Das IP-Terminal IPT fordert von der Zugangsüberwacheinrichtung GK die Paketdatenadresse IPAD der zu rufenden mobilen Kommunikationseinrichtung MS mit Teilnehmerrufnummer MSISDN an. Diese Zugangsüberwacheinrichtung GK führt nun die Funktion der Aufenthaltsabfrage entspr. 1.1 aus und empfängt daraufhin die Paketdatenadresse IPAD zur Identifikation der Zieleinrichtung sowie vorzugsweise auch die Aufenthaltsrufnummer MSRN von der Teilnehmerdatenbasis HLR. Die Zugangsüberwacheinrichtung GK erfüllt damit die Aufgabe einer virtuellen Zugangsvermittlungseinrichtung VIGMSC.

Bei einer Aufenthaltsrufnummer MSRN zu einem nicht IP-basierten Mobilfunknetz PLMN muß die virtuelle Zugangsvermittlungseinrichtung GMSC die ankommende Verbindung zu der entsprechenden Zugangseinrichtung VoIPGW in diesem Netz routen, die Voice over IP in leitungsvermittelte Sprache umsetzt. Ebenso kann die virtuelle Zugangsvermittlungseinrichtung GMSC vermittlungstechnische Funktionen wie Rufweiterleitung (CallForwarding) oder Interworking mit IN-Diensten ausführen. Für den Fall, daß der rufende Teilnehmer aus dem Internet INT nicht authentifiziert und vergebührt werden kann - z.B. möglich durch Integration der AAA-Funktion in der virtuellen Zugangsvermittlungseinrichtung VIGMSC - , muß der gerufene Teilnehmer für die Vergebührung der Verbindung aufkommen. Hierfür kann in der virtuellen Zugangsvermittlungseinrichtung VIGMSC ein Vorabzahlungsdienst (Prepaid Service) implementiert werden, wie er beispielsweise in Mobilfunknetzen von der Zugangsvermittlungseinrichtung GMSC bekannt ist.

### 2. Die mobile Kommunikationseinrichtung MS ist IP-basiert und unterstützt IP-basierte Paketdienste

### 2.1 Zugang vom Paketnetz INT

In diesem Fall besitzt die mobile Kommunikationseinrichtung MS eine eigene Paketdatenadresse IPAD, mit der sie selbst als Zieleinrichtung identifizierbar und prinzipiell an einer Zugangseinrichtung zu einem Paketnetz erreichbar ist. Diese Zugangseinrichtung kann beispielsweise eine Zugangseinrichtung GGSN oder ein "Home Agent" im Internet INT sein. Das Routen der ankommenden Verbindung durch die virtuelle VIGMSC für den Verbindungsaufbau erfolgt entsprechend zu 1.2., wobei die Signalisierungsinformation vom IP-Terminal IPT über die virtuelle VIGMSC zum Kontrollknoten EN übertragen wird.

Für die aufzubauenden Datenströme wird dann die Paketdatenadresse IPAD der Kommunikationseinrichtung MS verwendet und nicht die des Kontrollknotens EN. Eine statische Paketdatenadresse IPAD der Kommunikationseinrichtung MS wird für diesen Fall bereits durch die Teilnehmerdatenbasis geliefert. Eine dynamische Paketdatenadresse IPAD wird von dem Kontrollknoten EN bereitgestellt, wobei sie bereits dann bekannt ist, wenn die Kommunikationseinrichtung MS aktiv ist, oder muß durch einen Verbindungsaufbau zu dem die Verbindung initiierenden Paketnetz INT über eine Zugangseinrichtung GGSN ermittelt werden. Dadurch wird die Verbindung zum entsprechenden Zugangseinrichtung GGSN oder "Home agent" geroutet. Beide Netzeinrichtungen können auch mit dem Kontrollknoten zusammen fallen. Falls die Kommunikationseinrichtung MS in einem Netz sich bewegt, das nicht IP-basiert ist, kann mit Hilfe der Aufenthaltsrufnummer MSRN über eine Zugangseinrichtung (Gateway) geroutet werden.

### 2.2 Zugang vom leitungsvermittelten Festnetz

Wie bereits in Beispiel 1.1 angedeutet, ist es auch möglich, vom leitungsvermittelten Festnetz eine den Paketdienst unterstützende mobile Kommunikationseinrichtung MS zu rufen. Dabei ergibt sich eine Kombination der Fälle 1.1 und 2.1. Die Verbindung wird über die Zugangsvermittlungseinrichtung GMSC aufgebaut, der Datenstrom dann aber über eine Zugangseinrichtung GGSN geroutet. Da bei IP-basierten Verbindungen im allgemeinen die mobile Kommunikationseinrichtung MS für die Nutzung der Funkressourcen vergebührt wird - im Festnetz jedoch der Anrufer - ist gegen eine Doppelvergebührung Vorkehrung zu treffen. Hierfür kann im Kontrollknoten EN der in 1.1 beschriebene Parameter verwendet werden, welcher den Ruf einer leitungsvermittelten mobilen Kommunikationseinrichtung kennzeichnet.

## Patentansprüche

1. Verfahren zur Behandlung eines Paketdienstes, wobei
- Daten über zumindest einen Teil eines paketbasierten Kern-Kommunikationsnetzes (IPCNW) als Paketdaten übertragen werden,
- die Paketdaten von und zu zumindest einer mobilen Kommunikationseinrichtung (MS) über ein Anschluss-Kommunikationsnetz (ANW) mit einer Funkschnittstelle drahtlos übertragen werden,
- eine Aufenthaltsabfrage, durch die eine Aufenthaltsrufnummer (MSRN) für die mobile Kommunikationseinrichtung (MS) angefordert wird, gestartet wird,
charakterisiert dadurch, dass
- auf die Aufenthaltsabfrage zusammen mit der Aufenthaltsrufnummer (MSRN) eine Paketdatenadresse (IPAD) zur Identifikation einer Zieleinrichtung (EN, MS) für die Übertragung der Paketdaten von und zu der mobilen Kommunikationseinrichtung (MS) über die Funkschnittstelle des Anschluss-Kommunikationsnetzes (ANW) rückgesendet wird.

2. Verfahren nach Anspruch 1, bei dem
für den Fall, dass die mobile Kommunikationseinrichtung (MS) den Pakefcdiensfc nicht unterstützt, durch die Paketdatenadresse (IPAD) ein die mobile Kommunikationseinrichtung (MS) bedienender Kontrollknoten (EN) identifiziert wird.

3. Verfahren nach Anspruch 2, bei dem
durch den über die Paketdatenadresse (IPAD) identifizierten Kontrollknoten (EN) die Übertragung der Paketdaten gesteuert und in die Datenübertragung von und zu der mobilen Kommunikationseinrichtung (MS) über die Funkschnittstelle des Anschluss-Kommunikationsnetzes (ANW) integriert wird.

4. Verfahren nach Anspruch 2 oder 3, bei dem
für eine aus einem leitungsvermittelten Kommunikationsnetz (ISDN) ankommende Verbindung von einer Zugangsvermittlungseinrichtung (GMSC) die Aufenthaltsabfrage gestartet, die Pa-(MSRN) empfangen und für den Aufbau eines Verbindungsprotokolls zum Kontrollknoten (EN) benutzt wird.

5. Verfahren nach Anspruch 4, bei dem
von der Zugangsvermittlungseinrichtung (GMSC) und von dem Kontrollknoten (EN) jeweils eine Abbildung einer Teilnehmerrufnummer (E164) auf die Paketdatenadresse (IPAD) und umgekehrt durchgeführt wird.

6. Verfahren nach einem der Ansprüche 2 bis 5, bei dem
durch den Kontrollknoten (EN) entschieden wird, ob zu der mobilen Kommunikationseinrichtung (MS) eine paketbasierte Verbindung oder eine leitungsvermittelte Verbindung aufgebaut wird.

7. Verfahren nach Anspruch 1, bei dem
für den Fall, dass die mobile Kommunikationseinrichtung (MS) den Paketdienst unterstützt, durch die Paketdatenadresse (IPAD) die Kommunikationseinrichtung (MS) selbst als Zieleinrichtung identifiziert wird.

8. Verfahren nach Anspruch 7, bei dem
für eine aus einem Paketdatennetz (INT) ankommende Verbindung von einer die Funktion einer virtuellen Zugangsvermittlungseinrichtung (GMSC) erfüllenden Zugangsüberwacheinrichtung (GK) die Aufenthaltsabfrage gestartet und die Paketdatenadresse (IPAD) zusammen mit der Aufenthaltsrufnummer (MSRN) empfangen wird.

9. Verfahren nach Anspruch 7 , bei dem
für eine aus einem Paketdatennetz (INT) ankommende Verbindung von einer die Funktion einer virtuellen Zugangsvermittlungseinrichtung (VIGMSC) erfüllenden Zugangsüberwacheinrichtung (GK) die Aufenthaltsabfrage gestartet und nur die Paketdatenadresse (IPAD) an Stelle der Aufenthaltsrufnummer (MSRN) empfangen wird.

10. Verfahren nach einem der vorhergehenden Ansprüche, bei dem die Aufenthaltsabfrage an eine zentrale Teilnehmerdatenbasis (HLR), die mit einem die mobile Kommunikationseinrichtung (MS) bedienenden Kontrollknoten (EN) verbunden ist, gerichtet wird.

11. Verfahren nach Anspruch 10, bei dem
die Teilnehmerdatenbasis (HLR) vom Kontrollknoten (EN) entweder beim Einbuchen der mobilen Kommunikationseinrichtung (MS) in den Kontrollknoten (EN) oder während der Aufenthaltsabfrage über die Paketdatenadresse (IPAD) informiert wird.

12. Kommunikationssystem zur Behandlung eines Paketdienstes, mit
- einem paketbasierten Kern-Kommunikationsnetz (IPCNW) zur zumindest teilweisen Übertragung von Daten als Paketdaten,
- einem Anschluss-Kommunikationsnetz (ANW) mit einer Funkschnittstelle zur drahtlosen Übertragung der Paketdaten von und zu zumindest einer mobilen Kommunikationseinrichtung (MS),
- einer Netzeinrichtung (GMSC, VIGMSC) zum Starten einer Aufenthaltsabfrage, durch die eine Aufenthaltsrufnummer (MSRN) für die mobile Kommunikationseinrichtung (MS) angefordert wird,
wobei das Kommunikationssystem dadurch charakterisiert ist, dass es
- eine zentrale Teilnehmerdatenbasis (HLR) zum Rücksenden einer Aufenthaltsrufnummer (MSRN) zusammen mit einer Paketdatenadresse (IPAD) zur Identifikation einer Zieleinrichtung (EN, MS) für die Übertragung der Paketdaten von und zu der mobilen Kommunikationseinrichtung (MS) über die Funkschnittstelle des Anschluss-Kommunikationsnetzes (ANW) aufweist.

13. Kommunikationssystem nach Anspruch 12, mit
einer mobilen Kommunikationseinrichtung (MS), die den Paketdienst nicht unterstützt, und einer Paketdatenadresse (IPAD).

14. Kommunikationssystem nach Anspruch 12, mit
einer mobilen Kommunikationseinrichtung (MS), die den Paketdienst unterstützt, und einer Paketdatenadresse (IPAD) zur Identifikation der mobilen Kommunikationseinrichtung (MS) als Zieleinrichtung.

## Claims

1. Method for handling a packet service, in which
- data is transmitted as packet data via at least a part of a packet-based core communications network (IPCNW),
- the packet data is transmitted without the use of wires using a radio interface from and to at least one mobile communication device (MS) via a connection communications network (ANW),
- a location check, which requests a location call number (MSRN) for the mobile communication device (MS), is started,
**characterized in that**
- in response to the location check, a packet data address (IPAD) for identification of a destination device (EN, MS) for the transmission of the packet data from and to the mobile communication device (MS) is transmitted back, together with the location call number (MSRN), via the radio interface of the connection communications network (ANW).

2. Method according to Claim 1, in which
in the situation where the mobile communication device (MS) does not support the packet service, the packet data address (IPAD) identifies a monitoring node (EN) which is controlling the mobile communication device (MS).

3. Method according to Claim 2, in which
the monitoring node (EN) which is identified via the packet data address (IPAD) controls the transmission of the packet data, which is integrated in the data transmission from and to the mobile communication device (MS) via the radio interface in the connection communications network (ANW).

4. Method according to Claim 2 or 3, in which
the location check is started by an access switching device (GMSC) for an incoming connection from a line-switched communications network (ISDN), the pa [lacuna] (MSRN) is received, and is used for setting up a connection protocol for the monitoring node (EN).

5. Method according to Claim 4, in which
the access switching device (GMSC) and the monitoring node (EN) each map a subscriber call number (E164) onto the packet data address (IPAD), and vice versa.

6. Method according to one of Claims 2 to 5, in which the monitoring node (EN) decides whether a packet-based connection or a line-switched connection will be set up to the mobile communication device (MS).

7. Method according to Claim 1, in which
in the situation where the mobile communication device (MS) supports the packet service, the packet data address (IPAD) identifies the communication device (MS) itself as the destination device.

8. Method according to Claim 7, in which
the location check is started for an incoming connection from a packet data network (INT) by an access monitoring device (GK) which carries out the function of a virtual access switching device (GMSC), and the packet data address (IPAD) is received together with the location call number (MSRN).

9. Method according to Claim 7, in which
the location check is started for an incoming connection from a packet data network (INT) by an access monitoring device (GK) which carries out the function of a virtual access switching device (VIGMSC) and only the packet data address (IPAD) is received, instead of the location call number (MSRN).

10. Method according to one of the preceding claims, in which the location check is directed to a central subscriber database (HLR), which is connected to a monitoring node (EN) which controls the mobile communication device (MS).

11. Method according to Claim 10, in which
the subscriber database (HLR) is informed of the packet data address (IPAD) by the monitoring node (EN) either when the mobile communication device (MS) registers with the monitoring node (EN) or during the location check.

12. Communications system for handling a packet service, having
- a packet-based core communications network (IPCNW) for at least partial transmission of data as packet data,
- a connection communications network (ANW) with a radio interface for transmitting packet data without the use of wires from and to at least one mobile communication device (MS),
- a network device (GMSC, VIGMSC) for starting a location check, by means of which a location call number (MSRN) is requested for the mobile communication device (MS),
with the communications system being **characterized in that** it
- has a central subscriber database (HLR) for transmitting back a location call number (MSRN) together with a packet data address (IPAD) for identification of a destination device (EN, MS) for the transmission of packet data from and to the mobile communication device (MS) via the radio interface of the connection communications network (ANW).

13. Communications system according to Claim 12, having
a mobile communication device (MS) which does not support the packet service, and a packet data address (IPAD) [lacuna].

14. Communications system according to Claim 12, having
a mobile communication device (MS) which supports the packet service, and a packet data address (IPAD) for identification of the mobile communication device (MS) as the destination device.

## Revendications

1. Procédé de traitement d'un service en paquets, dans lequel
- on transmet des données sous la forme de données en paquets par au moins une partie d'un réseau de communications à noyau fondé sur des paquets (IPCNW),
- on transmet sans fil les données en paquets par au moins un dispositif (MS) mobile de télécommunication à une interface radio en passant par un réseau de télécommunications de connexion (ANW) et inversement,
- on initie une interrogation de séjour, par laquelle le numéro d'appel de séjour du dispositif (MS) mobile de télécommunication est demandé,
**caractérisé en ce que**
- sur l'interrogation de séjour ensemble avec le numéro d'appel de séjour (MSRN), il est renvoyé une adresse de données en paquets (IPAD) pour l'identification d'un dispositif de destination (EN, MS) pour la transmission des données en paquets du dispositif mobile de télécommunication (MS) au réseau de télécommunications de connexion (ANW) en passant par l'interface radio.

2. Procédé suivant la revendication 1, dans lequel, dans le cas où le dispositif mobile de télécommunication (MS) ne soutient pas le service de données en paquets, un noeud de contrôle (EN) servant le dispositif mobile de télécommunication (MS) est identifié par l'adresse de données en paquets (IPAD).

3. Procédé suivant la revendication 2, dans lequel, par le noeud de contrôle (EN) identifié par l'adresse de données en paquets (IPAD), la transmission des données en paquets est commandée et il est intégré dans la transmission des données du dispositif mobile de télécommunication (MS) au réseau de télécommunications de connexion (ANW) en passant par l'interface radio et inversement.

4. Procédé suivant la revendication 2 ou 3, dans lequel, pour une liaison venant d'un réseau de communications à commutation de circuit (ISDN), l'interrogation de séjour est initiée par un dispositif de commutation d'accès (GMSC) qui reçoit les numéros d'appel de séjour (MSRN) et les utilise pour la construction d'un protocole de liaison allant au noeud de contrôle (EN).

5. Procédé suivant la revendication 4, dans lequel il s'effectue par le dispositif de commutation d'accès (GMSC) et par le noeud de contrôle (EN) respectivement une reproduction du numéro d'appel de l'abonné (E164) sur l'adresse de données en paquets (IPAD) et inversement.

6. Procédé suivant l'une des revendications 2 à 5, dans lequel il est décidé par le noeud de contrôle (EN) si une liaison fondée sur des paquets ou une liaison par commutation de circuit doit être constituée vers le dispositif mobile de télécommunication (MS).

7. Procédé suivant la revendication 1, dans lequel dans le cas où le dispositif (MS) mobile de télécommunication soutient le service de données en paquets, il est identifié par l'adresse de données en paquets (IPAD) le dispositif de télécommunication (MS) soi-même en tant que dispositif de destination.

8. Procédé suivant la revendication 7, dans lequel, pour une liaison arrivant d'un réseau de données en paquets (INT), il est initié par un dispositif de surveillance d'accès (GK) remplissant la fonction d'un dispositif de commutation d'accès virtuel (GMSC) l'interrogation de séjour, et l'adresse de données de paquets (IPAD) est reçue ensemble avec le numéro d'appel de séjour (MSRN).

9. Procédé suivant la revendication 7, dans lequel, pour une liaison arrivant d'un réseau de données en paquets (INT), il est initié par un dispositif de surveillance d'accès (GK) remplissant la fonction d'un dispositif de commutation d'accès virtuel (VIGMSC) l'interrogation de séjour, et seule l'adresse de données de paquets (IPAD) est reçue au lieu du numéro d'appel de séjour (MSRN).

10. Procédé suivant l'une des revendications précédentes, dans lequel l'interrogation de séjour est dirigée sur une base centrale de données d'abonnés (HLR) qui est reliée à un noeud de contrôle (EN) servant le dispositif mobile de télécommunication (MS).

11. Procédé suivant la revendication 10, dans lequel la base de données d'abonnés (HLR) est informée par le nceud de contrôle (EN) soit lors de l'enregistrement du dispositif mobile de télécommunication (MS) dans le noeud de contrôle (EN), soit pendant l'interrogation de séjour par l'adresse de données en paquets (IPAD).

12. Système de télécommunication pour le traitement d'un service de données en paquets comprenant
- un réseau de communications à noyau à base de paquets (IPCNW) de transmission au moins en partie de données sous forme de données en paquets,
- un réseau de télécommunications de connexion (ANW) comprenant une interface pour la transmission sans fil des données en paquets à partir d'au moins un dispositif de télécommunication mobile (MS) et vers celui-ci,
- un dispositif de réseau (GMSC, VIGMSC) pour initier une interrogation de séjour par laquelle un numéro d'appel de séjour (MSRN) est demandé pour le dispositif de télécommunication mobile (MS),
le système de télécommunication étant **caractérisé en ce que**
- il a une base centrale de données d'abonnés (HLR) pour réémettre un numéro d'appel de séjour (MSRN) en même temps qu'une adresse de données en paquets (IPAD) en vue de l'identification d'un dispositif de destination (EN, MS) pour la transmission des données en paquets du dispositif de télécommunication mobile (MS) et à celui-ci par l'interface radio du réseau de télécommunications de commutation (ANW).

13. Système de télécommunication suivant la revendication 12, comprenant un dispositif de télécommunication mobile (MS) qui ne soutient pas le service de données en paquets et une adresse de données en paquets (IPAD).

14. Système de télécommunication suivant la revendication 12, comprenant un dispositif mobile de télécommunication (MS) qui soutient le service de données en paquets et une adresse de données en paquets (IPAD) d'identification du dispositif de télécommunication mobile (MS) comme dispositif de destination.
